# EUROPÄISCHE PATENTSCHRIFT

(11) **EP 1 573 089 B1**
(45) Veröffentlichungstag und Bekanntmachung des Hinweises auf die Patenterteilung: **03.05.2006**
(21) Anmeldenummer: 03789270.0
(22) Anmeldetag: 13.12.2003
(51) Int. Cl.: C25B 9/20

(54) **DRUCKELEKTROLYSEUR UND ZELLRAHMEN FÜR EINEN SOLCHEN**
PRESSURE ELECTROLYSER AND CELL FRAME FOR SAID ELECTROLYSER
ELECTROLYSEUR SOUS PRESSION ET CADRE DE CELLULE DESTINE A UN TEL ELECTROLYSEUR

(30) Priorität: 19.12.2002 DE 10259386
(43) Veröffentlichungstag der Anmeldung: 14.09.2005
(73) Patentinhaber: GHW Gesellschaft für Hochleistungselektrolyseure zur Wasserstofferzeugung MBH, 82064 Strasslach (DE)
(72) Erfinder: RÄMISCH, Marko, 85521 Ottobrunn (DE); D'ERASMO, Pietro, N-3670 Notodden (NO)
(74) Vertreter: Winter, Josef
(86) Internationale Anmeldenummer: PCT/EP2003/014205
(87) Internationale Veröffentlichungsnummer: WO 2004/057058

(56) Entgegenhaltungen:
- EP-A- 0 995 818
- US-A- 4 342 460
- US-A- 4 748 092
- US-A- 4 915 803
- US-A- 6 086 643

## Beschreibung

Die Erfindung betrifft einen Druckelektrolyseur nach dem Oberbegriff des Anspruchs 1.

Zur elektrolytischen Aufspaltung von Wasser in Wasserstoff und Sauerstoff sind Druckelektrolyseure bekannt, die einen Druckbehälter und einen eine Anzahl von in Form eines Stapels zusammengefassten Elektrolysezellen enthaltenden, in dem Druckbehälter angeordneten Elektrolysezellenblock umfassen. Die Elektrolysezellen enthalten jeweilige Anoden und Kathoden. Ein Laugen- oder Elektrolytkreislaufsystem dient der Zuführung eines Anolyten zu den Anoden und zur Zuführung eines Katholyten zu den Kathoden. Der Elektrolysezellenblock verfügt über ein abgedichtetes Gehäuse, durch welches er gegen das Innere des Druckbehälters abgedichtet ist. Ein Druckelektrolyseur dieser Art ist aus der DE 25 48 699 C3 bekannt.

Herkömmlicherweise sind aufwendige Einrichtungen notwendig, um die einzelnen Zellen des Elektrolysezellenblocks gegeneinander zu verspannen und abzudichten, welche Federelemente, ein Tragegestell und ähnliche Bestandteile enthalten. Die Stromzuführung zum Elektrolysezellenblock besteht bisher aus einer Vielzahl von Teilen, darunter einem Druckrohr, Dichtungen, etc.

Die Aufgabe der Erfindung ist es einen verbesserten Druckelektrolyseur zu schaffen. Insbesondere soll ein Druckelektrolyseur geschaffen werden, der einfacher und mit einer geringeren Anzahl von Bauteilen aufgebaut und damit zu günstigen Kosten herstellbar ist. Weiterhin soll ein Zellrahmen zum Aufbau des Elektrolysezellenblocks geschaffen werden.

Die gestellte Aufgabe wird durch einen Druckelektrolyseur mit den Merkmalen des Anspruchs 1 gelöst.

Vorteilhafte Weiterbildungen sind in den jeweiligen Unteransprüchen angegeben.

Durch die Erfindung wird ein Druckelektrolyseur mit einem eine Anzahl von in Form eines Stapels zusammengefassten Elektrolysezellen enthaltenden Elektrolysezellenblock geschaffen. Die Elektrolysezellen enthalten jeweilige Anoden und Kathoden. Der Elektrolysezellenblock hat ein abgedichtetes Gehäuse. An den Enden des Elektrolysezellenblocks sind Endplatten vorgesehen. Erfindungsgemäß ist das Gehäuse des Elektrolysezellenblocks durch eine Anzahl von aufeinandergestapelten Zellrahmen gebildet. Die Zellrahmen bestehen zumindest teilweise aus einem zumindest in Längsrichtung und Querrichtung des Elektrolysezellenblocks elastischen Material, welches benachbarte Zellrahmen gegeneinander abdichtet. Der Elektrolysezellenblock ist unter Kompression des elastischen Materials in Längsrichtung zwischen den Endplatten eingespannt. Ein Vorteil des erfindungsgemäßen Druckelektrolyseurs ist es, dass durch das in den Zellrahmen vorgesehene elastische Material Wärmeausdehnungen der einzelnen Elektrolysezellen und damit des gesamten Elektrolysezellenblocks ausgeglichen werden. Dadurch können einerseits die Endplatten in vereinfachter Weise feststehend, beispielsweise in Form von Kesseldeckeln eines den Elektrolysezellenblocks umgebenden Druckbehälters vorgesehen sein, andererseits können zusätzliche Einrichtungen entfallen, um den Elektrolysezellenblock in allen Temperaturbereichen unter einer definierten Vorspannung zu halten. Weiterhin können auch größere Fertigungstolleranzen der Elektrolysezellen bzw. der Zellrahmen von dem elastischen Material kompensiert werden. Die Zellrahmen weisen ein in Umfangsrichtung des Rahmens verlaufendes festes Element zur mechanischen Stabilisierung der Zellrahmen auf, mit dem das elastische Material verbunden ist. Das feste Element bildet eine schalenartige Rahmenstruktur, die das elastische Material teilweise umfasst und aus der das elastische Material unter Bildung eines kompressiblen Bereichs in Längsrichtung des Elektrolysezellenblocks teilweise hervorsteht.

Benachbarte Zellrahmen weisen jeweilige ineinander passende Vorsprünge und Ausnehmungen zur gegenseitigen Fixierung und/oder Abdichtung der benachbarten Zellrahmen auf.

Gemäß einer Ausführungsform der Erfindung kann das feste Element eine rahmenartige Einlage bilden, die in das elastische Material ganz oder teilweise eingebettet ist.

Gemäß einer bevorzugten Ausführungsform der Erfindung kann jeweils jede Anode einen eigenen Anodenzellrahmen und jeweils jede Kathode einen eigenen Kathodenzellrahmen aufweisen.

Das elastische Material kann aus einem Elastomer oder einem elastischen Weichthermoplast gebildet sein.

Das feste Element kann aus einem formstabilen Material, insbesondere Metall oder Kunststoff bestehen.

Das die schalenartige Rahmenstruktur bildende feste Element kann aus einem elektrisch isolierenden Material, insbesondere Kunststoff bestehen.

Weiterhin wird durch die Erfindung ein Zellrahmen für einen Druckelektrolyseur mit den vorher genannten Merkmalen geschaffen.

Im folgenden werden Ausführungsbeispiele der Erfindung anhand der Zeichnung erläutert.

Es zeigt:
Figur 1 eine schematisierte geschnittene Draufsicht auf einen Druckelektrolyseur gemäß einem Ausführungsbeispiel der Erfindung;
Figur 2 eine vergrößerte geschnittene Darstellung eines Teils von Zellrahmen der Elektrolysezellen, welche gleichzeitig ein abdichtendes Gehäuse des Elektrolysezellenblocks bilden gemäß einem Ausführungsbeispiel der Erfindung;
Figur 3 eine geschnittene Darstellung ähnlich Figur 2 von einem anderen Ausführungsbeispiel der Erfindung;
Figur 4 eine Detailansicht eines Zellrahmens gemäß einem weiteren Ausführungsbeispiel der Erfindung.

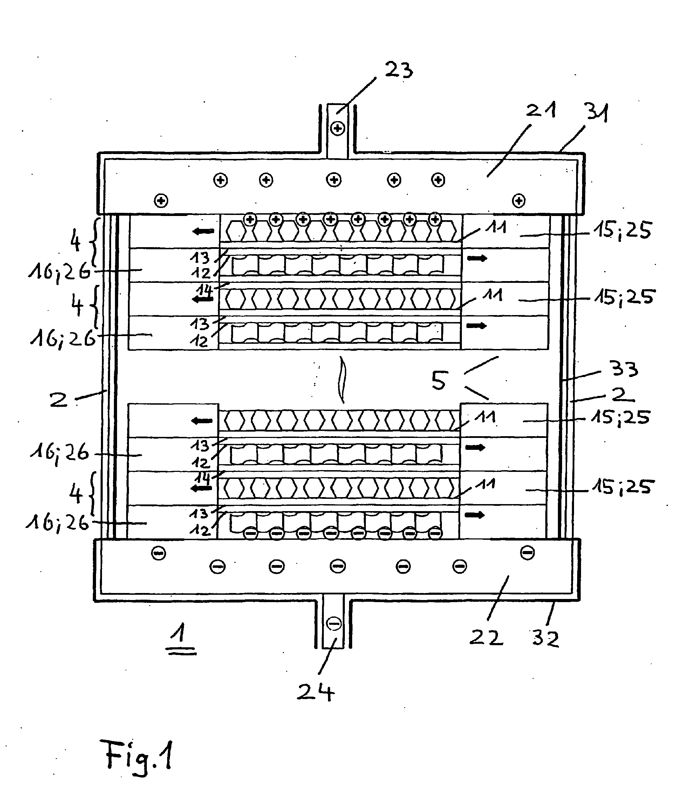

In Figur 1 ist ein insgesamt mit dem Bezugszeichen 1 bezeichneter Druckelektrolyseur dargestellt, bei dem ein Elektrolysezellenblock 3 in einem Druckbehälter 2 angeordnet ist. Der Elektrolysezellenblock 3 besteht aus einer Anzahl von in Form eines Stapels angeordneten Elektrolysezellen 4. Jede Elektrolysezelle 4 umfasst eine Anode 11 und eine Kathode 12, welche durch ein dazwischen angeordnetes Diaphragma 13 voneinander getrennt sind. Zwischen zwei benachbarten Elektrolysezellen 4 befindet sich jeweils ein Bipolarblech 14, durch welches der anodenseitige Zellraum der einen Elektrolysezelle 4 vom kathodenseitigen Zellraum der benachbarten Elektrolysezelle 4 getrennt, dabei gleichzeitig aber miteinander elektrisch in Kontakt gehalten sind. An den Enden des Elektrolysezellenblocks 3 sind Endplatten 21, 22 vorgesehen, nämlich eine anodenseitige Endplatte 21 und eine kathodenseitige Endplatte 22. Durch die Endplatten 21, 22 wird der Elektrolysezellenblock 3 in seiner Längsrichtung unter gegenseitiger Abdichtung der einzelnen Elektrolysezellen 4 unter mechanischer Vorspannung gehalten. Weiterhin bilden die Endplatten 21, 22 den endseitigen Abschluss des Druckbehälters 2. Schließlich dienen die Endplatten 21, 22 dem elektrischen Stromanschluss des Elektrolysezellenblocks 3, welcher über eine anodenseitige Stromanschlussleitung 23 und eine kathodenseitige Stromanschlussleitung 24 erfolgt. An den Endplatten 21, 22 und an der Innenseite des Druckbehälters 2 sind jeweilige elektrische Isolierungen 31, 32, 33 angeordnet. Das Gehäuse 5 des Elektrolysezellenblocks 3 ist durch eine Anzahl von aufeinandergestapelten Zellrahmen 15, 16; 25, 26 der Elektrolysezellen 4 gebildet. Bei dem in Figur 1 dargestellten Ausführungsbeispiel ist jeweils jeder Anode 11 benachbart ein eigener Anodenzellrahmen 15; 25 und jeweils jeder Kathode 12 benachbart ein eigener Kathodenzellrahmen 16; 26 vorgesehen.

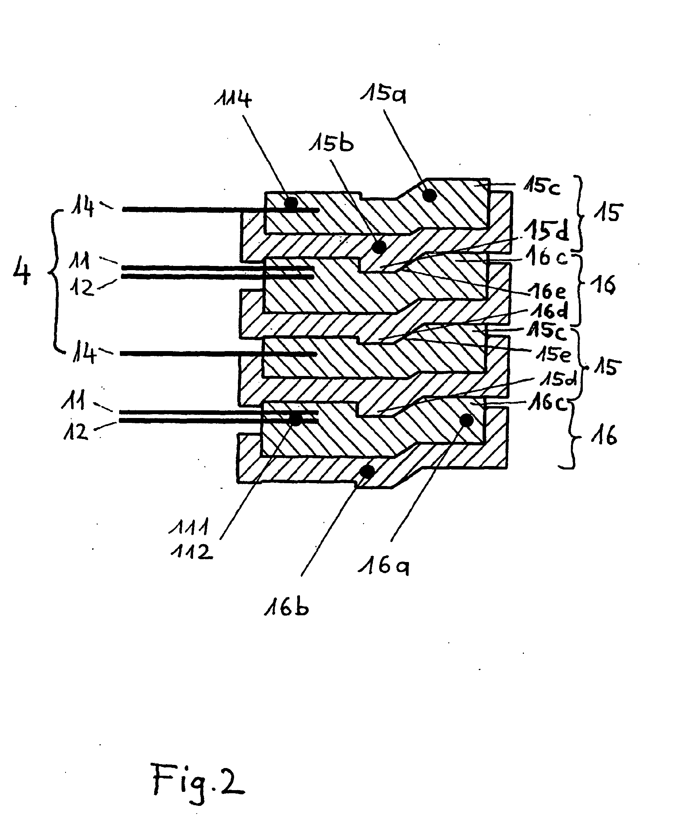

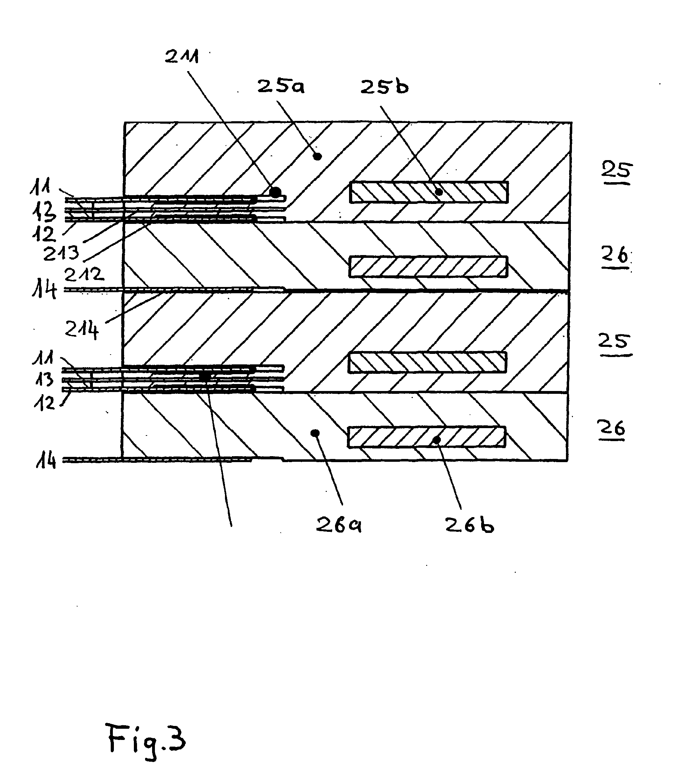

Wie die Figuren 2 und 3 zeigen, welche zwei verschiedene Ausführungsbeispiele der Zellrahmen 15, 16 bzw. 25, 26 darstellen, bestehen die Zellrahmen 15, 16; 25, 26 zumindest teilweise aus einem elastischen Material 15a, 16a bzw. 25a, 26a, das zumindest in Längsrichtung und Querrichtung des Elektrolysezellenblocks 3 elastisch ist. Dieses elastische Material 15a, 16a bzw. 25a, 26a dichtet benachbarte Zellrahmen 15, 16 bzw. 25, 26 gegeneinander ab, wobei das elastische Material 15a, 16a bzw. 25a, 26a in Längsrichtung des Elektrolysezellenblocks 3 komprimiert wird, dadurch bewirkt, dass der Elektrolysezellenblock 3 zwischen den Endplatten 21, 22 eingespannt ist, wie der Figur 1 zu entnehmen ist. Neben der gegenseitigen Abdichtung benachbarter Zellrahmen 15, 16 bzw. 25, 26 bewirkt die Kompressibilität des elastischen Materials 15a, 16a bzw. 25a, 26a eine Kompensation von Wärmeausdehnungen bzw. Schrumpfungen bei Inbetriebnahme, Betrieb und Außerbetriebnahme des Druckelektrolyseurs und außerdem eine Kompensation von Maßtolleranzen der einzelnen Zellrahmen 15, 16 bzw. 25, 26. Die Zellrahmen 15, 16 bzw. 25, 26 umfassen weiterhin ein in Umfangsrichtung des Rahmens verlaufendes festes Element 15b, 16b bzw. 25b, 26b, welches der mechanischen Stabilisierung der Zellrahmen 15, 16 bzw. 25, 26 dient und mit dem das elastische Material 15a, 16a bzw. 25a, 26a verbunden ist.

Bei dem in Figur 2 dargestellten Ausführungsbeispiel bildet das feste Element 15b, 16b eine schalenartige Rahmenstruktur, die das elastische Material 15a, 16a teilweise umfasst und aus der das elastische Material 15a, 16a unter Bildung eines kompressiblen Bereichs 15c, 16c in Längsrichtung des Elektrolysezellenblocks 3 teilweise hervorsteht. Somit kann das elastische Material 15a, 16a jeweils zwischen dem festen Element 15b, 16b, in welchem es eingebettet ist, und dem festen Element 15b, 16b des benachbarten Zellrahmens 15, 16 unter Kompression gesetzt werden, so dass es die oben geschilderten Funktionen des Abdichtens benachbarter Zellrahmen 15, 16 und der Kompensation von Wärmeausdehnungen erfüllen kann.

Bei dem in Figur 3 dargestellten Ausführungsbeispiel bildet das feste Element 25b, 26b eine rahmenartige Einlage, die in das elastische Material 25a, 26a des jeweiligen Zellrahmens 25 bzw. 26 eingebettet ist.

Wie in Figur 2 gezeigt ist, weisen die benachbarten Zellrahmen 15, 16 jeweilige ineinanderpassende Vorsprünge 15d, 16d und Ausnehmungen 15e, 16e auf, welche der gegenseitigen Fixierung und/oder Abdichtung der benachbarten Zellrahmen 15, 16 dienen. So ist am Zellrahmen 15, nämlich an dessen schalenartig ausgebildeten festen Element 15b, ein Vorsprung 15d vorgesehen, der in eine Ausnehmung 16e des benachbarten Zellrahmens 16, nämlich in dessen elastischem Material 16a ineinanderpassend eingreift. Ebenso ist im Zellrahmen 16, nämlich in dessen schalenartig ausgebildetem festen Element 16b ein Vorsprung 16d ausgebildet, der in eine Ausnehmung 15e des folgenden benachbarten Zellrahmens 15, nämlich in dessen elastischem Material 15a vorgesehen ist, ineinanderpassend eingreift.

Bei beiden in den Figuren 2 und 3 dargestellten Ausführungsbeispielen ist jeweils jeder Anode 11 ein eigener Anodenzellrahmen 15 bzw. 25 und jeweils jeder Kathode 12 ein eigener Kathodenzellrahmen 16 bzw. 26 zugeordnet.

Bei dem Ausführungsbeispiel von Figur 2 sind in dem elastischen Material 16a des Zellrahmens 16, der hier als Kathodenzellrahmen bezeichnet werden soll, umlaufende Schlitzungen 111, 112 vorgesehen, welche die Anode 11 bzw. die Kathode 12 aufnehmen. In dem elastischen Material 15a des Zellrahmens 15, der hier als Anodenzellrahmen bezeichnet werden soll, ist eine umlaufende Schlitzung 114 vorgesehen, welche das Bipolarblech 14 aufnimmt. Obwohl somit in dem elastischen Material 16a des Kathodenzellrahmens 16 die Schlitzungen 111, 112 für sowohl die Anode 11 als auch die Kathode 12 vorgesehen sind, soll der Zellrahmen 15 als der Anode zugeordnet und der Zellrahmen 16 als der Kathode zugeordnet angesehen werden, was sich jeweils für jede Elektrolysezelle 4 wiederholt. Die umlaufenden Schlitzungen 111, 112, 114 in dem elastischen Material 15a bzw. 16a gestatten eine formstabile, dichte und positionshaltige Aufnahme von Anode 11, Kathode 12 bzw. Bipolarblech 14 ohne weitere Maßnahme. Entsprechendes gilt auch für ein in den Elektrolysezellen 4 enthaltenes Diaphragma, welches in Figur 2 der Einfachheit halber jedoch nicht dargestellt ist.

Bei dem in Figur 3 dargestellten Ausführungsbeispiel sind in dem elastischen Material 25a des Zellrahmens 25, der als Anodenzellrahmen bezeichnet werden soll, wiederum umlaufende Schlitzungen 211 und 213 vorgesehen, welche der Aufnahme der Anode 11 bzw. des Diaphragmas 13 dienen, welch letzteres hier im Gegensatz zu Figur 2 eigens dargestellt ist, sowie eine umlaufende Aussparung 212 an der dem elastischen Material 26a des benachbarten Zellrahmens 26 zugewandten Seite, in welcher die Kathode 12 aufgenommen ist. Das elastische Material 26a des benachbarten Zellrahmens 26, der als Kathodenzellrahmen bezeichnet werden soll, enthält seinerseits an der dem Zellrahmen 25 der folgenden Elektrolysezelle 4 zugewandten Seite eine Aussparung 214, welche der Aufnahme des Bipolarblechs 14 dient. Auch hier ist jeweils der Anode 11 und der Kathode 12 ein eigener Zellrahmen, nämlich der Anodenzellrahmen 25 bzw. der Kathodenzellrahmen 26 zugeordnet, was sich für jede Elektrolysezelle 4 wiederholt. Durch die umlaufenden Schlitzungen 211, 213 bzw. die umlaufenden Aussparungen 212, 214 sind wiederum die jeweiligen Elemente, nämlich die Anode 11, die Kathode 12, das Diaphragma 13 und das Bipolarblech 14 formstabil, dicht und positionshaltig in den Zellrahmen 25, 26 aufgenommen, so dass keine zusätzlichen Maßnahmen hierfür erforderlich sind.

Das elastische Material 15a, 16a bzw. 25a, 26a der jeweiligen Zellrahmen 15, 16 bzw. 25, 26 kann aus einem Elastomer oder einem elastischen Weichthermoplast gebildet sein.

Das feste Element 15b, 16b bzw. 25b, 26b der Zellrahmen 15, 16 bzw. 25, 26 kann aus einem formstabilen Material, insbesondere aus Metall, einem anderen geeigneten Metall oder aus Kunststoff bestehen.

Bei dem in Figur 2 dargestellten Ausführungsbeispiel besteht das die schalenartige Rahmenstruktur bildende feste Element 15b, 16b insbesondere aus einem elektrisch isolierendem Material, insbesondere aus Kunststoff.

Als zusätzlicher Schutz und zur Verbesserung gegen Entflammbarkeit lassen sich die von den im Druckelektrolyseur 1 vorhandenen gashaltigen Medien ständig beaufschlagten Flächen der Bestandteile der Zellrahmen 15, 16 bzw. 25, 26 mit einer geeigneten Beschichtung, z.B. PTFE abschirmen.

Die Form der Zellrahmen 15, 16 bzw. 25, 26 kann dem Inneren des Druckbehälters 2 so angepasst sein, dass diese, neben ihrer Funktion zur Bildung des Gehäuses 5 des Elektrolysezellenblocks 3 gleichzeitig auch als Tragestruktur für denselben dienen.

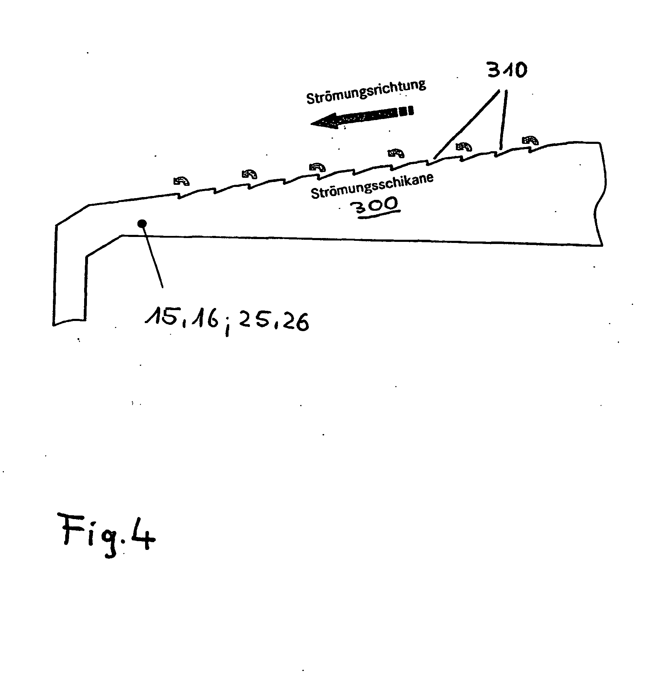

Wie Figur 4 zeigt, können an der Oberseite der oberen Rahmenschenkel der Zellrahmen 15, 16 bzw. 25, 26 durch Auszahnungen 310 gebildete Strömungsschikanen 300 vorgesehen sein, welche einer Verbesserung der Gasabscheidewirkung dienen.

### Bezugszeichenliste

- 1: Druckelektrolyseur
- 2: Druckbehälter
- 3: Elektrolysezellenblock
- 4: Elektrolysezellen
- 5: Gehäuse
- 11: Anode
- 12: Kathode
- 13: Diaphragma
- 14: Bipolarblech
- 15; 25: Anodenzellrahmen
- 15a; 25a: elastisches Material
- 15b; 25b: festes Element
- 15c: kompressibler Bereich
- 15d: Vorsprung
- 15e: Ausnehmung
- 16; 26: Kathodenzellrahmen
- 16a; 26a: elastisches Material
- 16b; 26b: festes Element
- 16c: kompressibler Bereich
- 16d: Vorsprung
- 16e: Ausnehmung
- 21, 22: Endplatte
- 23, 24: Stromanschlussleitung
- 31: elektrische Isolierung
- 32: elektrische Isolierung
- 33: elektrische Isolierung
- 111: Schlitzung
- 112: Schlitzung
- 114: Schlitzung
- 211: Schlitzung
- 212: Aussparung
- 213: Schlitzung
- 214: Aussparung
- 300: Strömungsschikane
- 310: Auszahnung

## Patentansprüche

1. Druckelektrolyseur mit einem eine Anzahl von in Form eines Stapels zusamraengefassten Elektrolysezellen (4) enthaltenden Elektrolysezellenblock (3), wobei die Elektrolysezellen (4) jeweilige Anoden (11) und Kathoden (12) enthalten und wobei der Elektrolysezellenblock (3) ein abgedichtetes Gehäuse (5) aufweist, wobei das Gehäuse (5) des Elektrolysezellenblocks (3) durch eine Anzahl von aufeinandergestapelten Zellrahmen (15, 16; 25, 26) der Elektrolysezellen (4) gebildet ist, wobei die Zellrahmen (15, 16; 25, 26) teilweise aus einem zumindest in Längsrichtung des Elektrolysezellenblocks (3) elastischen Material (15a, 16a; 25a, 26a) bestehen, welches benachbarte Zellrahmen (15, 16; 25, 26) gegeneinander abdichtet, wobei der Elektrolysezellenblock (3) unter. Kompression des elastischen Materials (15a, 16a; 25a, 26a) zwischen Endplatten (21, 22) eingespannt ist, wobei die Zellrahmen (15, 16; 25, 26) ein in Umfangsrichtung des Rahmens verlaufendes festes Element (15b, 16b; 25b, 26b) zur mechanischen Stabilisierung der Zellrahmen (15, 16; 25, 26) aufweisen, mit dem das elastische Material (15a, 16a; 25a, 26a) verbunden ist, wobei das feste Element (15b, 16b) eine schalenartige Rahmenstruktur bildet, die das elastische Material (15a, 16a) teilweise umfasst, und aus der das elastische Material (15a, 16a) unter Bildung eines kompressiblen Bereichs (15c, 16c) in Längsrichtung des Elektrolysezellenblocks (3) teilweise hervorsteht, wobei benachbarte Zellrahmen (15, 16; 25, 26) jeweilige ineinanderpassende Vorsprünge (15d, 16d) und Ausnehmungen (15e, 16e) zur gegenseitigen Fixierung und/oder Abdichtung der benachbarten Zellrahmen (15, 16; 25, 26) aufweisen.

2. Druckelektrolyseur mit einem eine Anzahl von in Form eines Stapels zusammengefassten Elektrolysezellen (4) enthaltenden Elektrolysezellenblock (3), wobei die Elektrolysezellen (4) jeweilige Anoden (11) und Kathoden (12) enthalten und wobei der Elektrolysezellenblock (3) ein abgedichtetes Gehäuse (5) aufweist, wobei das Gehäuse (5) des Elektrolysezellenblocks (3) durch eine Anzahl von aufeinandergestapelten Zellrahmen (15, 16; 25, 26) der Elektrolysezellen (4) gebildet ist, wobei die Zellrahmen (15, 16; 25, 26) teilweise aus einem zumindest in Längsrichtung des Elektrolysezellenblocks (3) elastischen Material (15a, 16a; 25a, 26a) bestehen, welches benachbarte Zellrahmen (15, 16; 25, 26) gegeneinander abdichtet, wobei der Elektrolysezellenblock (3) unter Kompression des elastischen Materials (15a, 16a; 25a, 26a) zwischen Endplatten (21, 22) eingespannt ist, wobei die Zellrahmen (15, 16; 25, 26) ein in Umfangsrichtung des Rahmens verlaufendes festes Element (15b, 16b; 25b, 26b) zur mechanischen Stabilisierung der Zellrahmen (15, 16; 25, 26) aufweisen, mit dem das elastische Material (15a, 16a; 25a, 26a) verbunden ist, wobei das feste Element (25b, 26b) eine rahmenartige Einlage bildet, die in das elastische Material (25a, 26a) ganz oder teilweise eingebettet ist, wobei benachbarte zellrahmen (15, 16; 25, 26) jeweilige ineinanderpassende Vorsprünge (15d, 16d) und Ausnehmungen (15e, 16e) zur gegenseitigen Fixierung und/oder Abdichtung der benachbarten Zellrahmen (15, 16; 25, 26) aufweisen.

3. Druckelektrolyseur nach Anspruch 1 oder 2, **dadurch gekennzeichnet, dass** jeweils jede Anode (11) einen eigenen Anodenzellrahmen (15; 25) und jeweils jede Kathode (12) einen eigenen Kathodenzellrahmen (16; 26) hat.

4. Druckelektrolyseur nach einem der Ansprüche 1 bis 3, **dadurch gekennzeichnet, dass** das elastische Material (15a, 16a; 25a, 26a) aus einem Elastomer oder einem elastischen weichthermoplast gebildet ist.

5. Druckelektrolyseur nach einem der Ansprüche 1 bis 4, **dadurch gekennzeichnet, dass** das feste Element (15b, 16b; 25b, 26b) aus einem formstabilen Material, insbesondere Metall oder Kunststoff besteht.

6. Druckelektrolyseur nach Anspruch 1, **dadurch gekennzeichnet, dass** das die schalenartige Rahmenstruktur bildende feste Element (15b, 16b) aus einem elektrisch isolierenden Material, insbesondere Kunststoff besteht.

7. Druckelektrolyseur nach einem der Ansprüche 1 bis 6, **dadurch gekennzeichnet, dass** die Endplatten (21, 22) die Stromzuführung zu den Enden des Elektrolysezellenblocks (3) bilden.

## Claims

1. Pressure electrolyser having an electrolysis cell block (3) containing a number of electrolysis cells (4) combined in the form of a stack, the electrolysis cells (4) containing respective anodes (11) and cathodes (12), and the electrolysis cell block (3) having a sealed housing (5), the housing (5) of the electrolysis cell block (3) being formed by a number of cell frames (15, 16; 25, 26) of the electrolysis cells (4) stacked on top of one another, the cell frames (15, 16; 25, 26) being partly composed of a material (15a, 16a; 25a, 26a) which is elastic at least in the longitudinal direction of the electrolysis cell block (3) and seals off adjacent cell frames (15, 16; 25, 26) from one another, the electrolysis cell block (3) being clamped between end plates (21, 22) so as to compress the elastic material (15a, 16a; 25a, 26a), the cell frames (15, 16; 25, 26) having a fixed element (15b, 16b; 25b, 26b) running in the peripheral direction of the frame for mechanically stabilizing the cell frames (15, 16; 25, 26), to which fixed element the elastic material (15a, 16a; 25a, 26a) is connected, the fixed element (15b, 16b) forming a shell-like frame structure which partially surrounds the elastic material (15a, 16a) and from which the elastic material (15a, 16a) partially projects in the longitudinal direction of the electrolysis cell block (3) to form a compressible region (15c, 16c), adjacent cell frames (15, 16; 25, 26) having respective projections (15d, 16d) and recesses (15e, 16e) which fit into one another in order to fix and/or seal the adjacent cell frames (15, 16; 25, 26) with respect to one another.

2. Pressure electrolyser having an electrolysis cell block (3) containing a number of electrolysis cells (4) combined in the form of a stack, the electrolysis cells (4) containing respective anodes (11) and cathodes (12), and the electrolysis cell block (3) having a sealed housing (5), the housing (5) of the electrolysis cell block (3) being formed by a number of cell frames (15, 16; 25, 26) of the electrolysis cells (4) stacked on top of one another, the cell frames (15, 16; 25, 26) being partly composed of a material (15a, 16a; 25a, 26a) which is elastic at least in the longitudinal direction of the electrolysis cell block (3) and seals off adjacent cell frames (15, 16; 25, 26) from one another, the electrolysis cell block (3) being clamped between end plates (21, 22) so as to compress the elastic material (15a, 16a; 25a, 26a), the cell frames (15, 16; 25; 26) having a fixed element (15b, 16b; 25b, 26b) running in the peripheral direction of the frame for mechanically stabilizing the cell frames (15, 16; 25, 26), to which fixed element the elastic material (15a, 16a; 25a, 26a) is connected, the fixed element (25b, 26b) forming a frame-like inlay which is completely or partially embedded in the elastic material (25a, 26a), adjacent cell frames (15, 16; 25, 26) having respective projections (15d, 16d) and recesses (15e, 16e), which fit into one another, to fix and/or seal the adjacent cell frames (15, 16; 25, 26) with respect to one another.

3. Pressure electrolyser according to Claim 1 or 2, **characterized in that** each anode (11) in each case has a dedicated anode cell frame (15; 25), and each cathode (12) in each case has a dedicated cathode cell frame (16; 26).

4. Pressure electrolyser according to one of Claims 1 to 3, **characterized in that** the elastic material (15a, 16a; 25a, 26a) is formed from an elastomer or an elastic soft thermoplastic.

5. Pressure electrolyser according to one of Claims 1 to 4, **characterized in that** the fixed element (15b, 16b; 25b, 26b) consists of a dimensionally stable material, in particular metal or plastic.

6. Pressure electrolyser according to Claim 1, **characterized in that** the fixed element (15b, 16b), which forms the shell-like frame structure, consists of an electrically insulating material, in particular plastic.

7. Pressure electrolyser according to one of Claims 1 to 6, **characterized in that** the end plates (21, 22) form the power supply to the ends of the electrolysis cell block (3).

## Revendications

1. Electrolyseur sous pression qui présente un bloc (3) de cellules d'électrolyse qui contient une pluralité de cellules d'électrolyse (4) rassemblées en forme de pile, les cellules d'électrolyse (4) contenant toutes une anode (11) et une cathode (12), le bloc (3) de cellules d'électrolyse présentant un boîtier (5) étanche, le boîtier (5) du bloc (3) de cellules d'électrolyse étant formé par une pluralité de cadres de cellule (15, 16; 25, 26) empilés les unes sur les autres pour les cellules d'électrolyse (4), les cadres de cellule (15, 16; 25, 26) étant constitués en partie d'un matériau (15a, 16a; 25a, 26a) élastique au moins dans le sens de la longueur du bloc (3) de cellules d'électrolyse et qui assure l'étanchéité entre les cadres de cellules (15, 16; 25, 26) voisins, le bloc (3) de cellules d'électrolyse étant serré entre des plaques d'extrémité (21, 22) en comprimant le matériau élastique (15a, 16a; 25a, 26a), les cadres de cellules (15, 16; 25, 26) présentant un élément fixe (15b, 16b; 25b; 26b) qui s'étend à la périphérie du cadre pour stabiliser mécaniquement les cadres de cellule (15, 16; 25; 26) et auquel le matériau élastique (15a, 16a; 25a, 26a) est relié, l'élément fixe (15b, 16b) formant une structure de cadre en forme de coquille qui entoure partiellement le matériau élastique (15a, 16a) et de laquelle le matériau élastique (15a, 16a) déborde partiellement en formant une zone compressible (15c, 16c) dans le sens de la longueur du bloc (3) de cellules d'électrolyse, des cadres de cellule (15, 16; 25, 26) voisins présentant tous des saillies (15d, 16d) et des découpes (15e, 16e) qui s'adaptent les unes dans les autres pour fixer mutuellement et/ou rendre étanches les cadres de cellules (15, 16; 25, 26) voisins.

2. Electrolyseur sous pression qui présente un bloc (3) de cellules d'électrolyse qui contient une pluralité de cellules d'électrolyse (4) rassemblées en forme de pile, les cellules d'électrolyse (4) contenant toutes une anode (11) et une cathode (12), le bloc (3) de cellules d'électrolyse présentant un boîtier (5) étanche, le boîtier (5) du bloc (3) de cellules d'électrolyse étant formé par une pluralité de cadres de cellule (15, 16; 25, 26) empilés les unes sur les autres pour les cellules d'électrolyse (4), les cadres de cellule (15, 16; 25, 26) étant constitués en partie d'un matériau (15a, 16a; 25a, 26a) élastique au moins dans le sens de la longueur du bloc (3) de cellules d'électrolyse et qui assure l'étanchéité entre les cadres de cellules (15, 16; 25, 26) voisins, le bloc (3) de cellules d'électrolyse étant serré entre des plaques d'extrémité (21, 22) en comprimant le matériau élastique (15a, 16a; 25a, 26a), les cadres de cellules (15, 16; 25, 26) présentant un élément fixe (15b, 16b; 25b; 26b) qui s'étend à la périphérie du cadre pour stabiliser mécaniquement les cadres de cellule (15, 16; 25; 26) et auquel le matériau élastique (15a, 16a; 25a, 26a) est relié, l'élément fixe (25b, 26b) formant une garniture en forme de cadre qui est incorporée entièrement ou partiellement dans le matériau élastique (25a, 26a), des cadres de cellule (15, 16; 25, 26) voisins présentant tous des saillies (15d, 16d) et des découpes (15e, 16e) qui s'adaptent les unes dans les autres pour fixer mutuellement et/ou rendre étanches les cadres de cellules (15, 16; 25, 26) voisins.

3. Electrolyseur sous pression selon la revendication 1 ou 2, **caractérisé en ce que** chaque anode (11) possède son propre cadre de cellule d'anode (15; 25) et chaque cathode (12) son propre cadre de cellule de cathode (16; 26).

4. Electrolyseur sous pression selon l'une quelconque des revendications 1 à 3, **caractérisé en ce que** le matériau élastique (15a, 16a; 25a, 26a) est formé d'un élastomère ou d'un thermoplastique élastiquement déformable.

5. Electrolyseur sous pression selon l'une quelconque des revendications 1 à 4, **caractérisé en ce que** l'élément fixe (15b, 16b; 25b, 26b) est constitué d'un matériau non déformable, en particulier un métal ou une matière synthétique.

6. Electrolyseur sous pression selon la revendication 1, **caractérisé en ce que** l'élément fixe (15b, 16b) qui forme la structure de cadre en forme de coquille est constitué d'un matériau électriquement isolant et en particulier d'une matière synthétique.

7. Electrolyseur sous pression selon l'une quelconque des revendications 1 à 6, **caractérisé en ce que** les plaques d'extrémité (21, 22) forment l'amenée de courant vers les extrémités du bloc (3) de cellules d'électrolyse.
